# EUROPEAN PATENT SPECIFICATION

(11) **EP 0 807 732 B1**
(45) Date of publication and mention of the grant of the patent: **13.04.2005**
(21) Application number: 97303303.8
(22) Date of filing: 15.05.1997
(51) Int. Cl.: E05B 49/00

(54) **Checking of identification signals**
Prüfung von Identifikationssignalen
Contrôle de signaux d'identification

(30) Priority: 16.05.1996 JP 12187096
(43) Date of publication of application: 19.11.1997
(73) Proprietor: SONY CORPORATION, Tokyo 141 (JP)
(72) Inventor: Takamatsu, Hiroyuki, Tokyo 141 (JP)
(74) Representative: Williams, Janice

(56) References cited:
- EP-A- 0 690 190
- GB-A- 2 192 665
- GB-A- 2 288 049
- US-A- 4 509 093
- US-A- 5 506 575

## Description

The present invention relates to an identification signal checking apparatus and an identification signal checking method which are suitable for use in a keyless entry system for example.

A keyless entry system has been proposed. In this keyless entry system, infrared rays or radio waves are used to transmit an identification signal from a key apparatus side to a lock apparatus side for the locking or the unlocking.

Such keyless entry system employs a one-way communication in which the key apparatus side constantly transmits the same identification signal. Therefore, when this communication is intercepted, the identification signal may disadvantageously be stolen easily.

Particularly when the identification signal is transmitted by using the infrared rays, it is possible to copy the identification signal easily by a so-called learning remote controller, which has already been developed into a social problem.

Moreover, since in the above keyless entry system it is possible to detect a specific identification signal by using each of various identification signals to detect whether or not each of the identification signals is agreed with the specific identification signal, there is the critical disadvantage in security.

In view of such aspects, it is therefore an object of the present invention to improve the security of the keyless entry system with a comparatively simple arrangement.

UK Patent Application Publication No GB-A-2 192 665 discloses an identification signal checking apparatus according to the pre-characterising part of claim 1 hereof.

The present invention provides an identification signal checking apparatus according to claim 1 hereof and an identification signal checking method according to claim 7 hereof.

In embodiments of the present invention, only when the first device, or apparatus to be detected (key apparatus), receives the communication permission signal from the second device, or detecting apparatus (lock apparatus), for a predetermined period, for example, the apparatus to be detected (key apparatus) transmits the identification signal to the detecting apparatus (lock apparatus). Therefore, the period of transmitting this identification signal is limited, and hence the security is improved.

Embodiments of the invention will now be described, by way of example, with reference to the accompanying drawings in which:
FIG. 1 is a block diagram showing an arrangement of an identification signal checking apparatus according to an embodiment of the present invention;
FIG. 2 is a flowchart used to explain an operation of the identification signal checking apparatus according to the embodiment of the present invention; and
FIGS. 3A to 3D are timing charts used to explain communication between a key apparatus and a lock apparatus according to the embodiment of the present invention.

An identification signal checking apparatus and an identification signal checking method according to an embodiment of the present invention will be described with reference to the accompanying drawings. In this embodiment, the identification signal checking apparatus and method are applied to a keyless entry system for opening and closing a door.

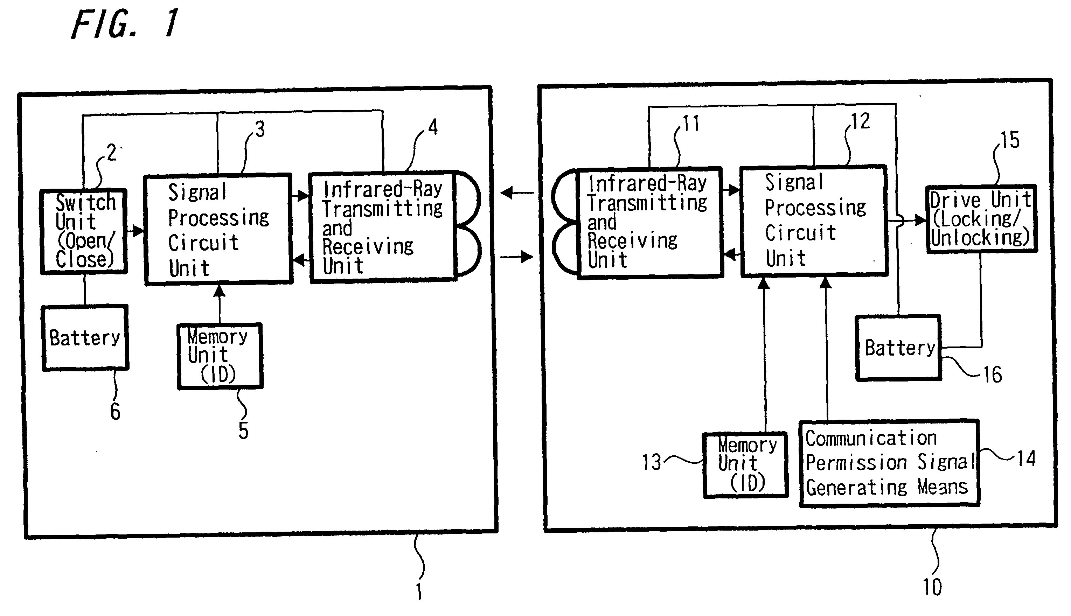

As shown in FIG. 1, a portable type key apparatus 1 has a switch unit 2 for issuing commands to open and close a door, a signal processing circuit unit 3, an infrared-ray transmitting and receiving unit 4 for communicating with a lock apparatus 10 described later on, and a memory unit 5 for storing a specific (own) identification signal ID.

The signal processing circuit unit 3 is formed of a microcomputer. When the switch unit 2 issues a commend to open or close the door by operating a switch thereof, the signal processing circuit unit 3 generates a communication request signal including a lock/unlock command signal and supplies this communication request signal to the infrared-ray transmitting and receiving unit 4. The infrared-ray transmitting and receiving unit 4 transmits the communication request signal to the lock apparatus 10.

As shown in FIG. 3A, the signal processing circuit unit 3 sets the infrared-ray transmitting and receiving unit 4 in its reception possible state only for a period of 50 ms succeeding a period of 40 ms after completion of transmission of the communication request signal having a period of 100 ms, for example. Only during this reception possible period, the infrared-ray transmitting and receiving unit 4 receives the communication permission signal from the lock apparatus 10 having a period of 30 ms. In this embodiment, the communication permission signal is formed of a random number signal of 24 bits, for example. In this case, if the infrared-ray transmitting and receiving unit 4 does not receive any communication permission signal during the reception possible period, this communication is stopped.

When the key apparatus 1 receives the communication permission signal formed of the 24-bit random number signal X, for example, from the lock apparatus 10, the signal processing circuit unit 3 encrypts a specific (own) identification signal ID of 24 bits, for example, stored in the memory unit 5 to convert it into a code signal of 24 bits, for example, in accordance with a predetermined function f(X, ID) by using a random number signal X of 24 bits, for example. Then, the signal processing circuit unit 3 supplies the encrypted signal f(X, ID) through the infrared-ray transmitting and receiving unit 4 to the lock apparatus 10.

This function f(X, ID) is defined as shown below, for example, such that if respective corresponding bits of the random number signal X and the identification signal ID have the same value of "1" or "0", then the value of a corresponding bit in the function f(X, ID) is set to "1" and if the respective corresponding bits thereof have the values different from each other, then the value thereof in the function f(X, ID) is set to "0" .

| | | | | | | | | | | | | | | | | | | | | | | | | |
|---|---|---|---|---|---|---|---|---|---|---|---|---|---|---|---|---|---|---|---|---|---|---|---|---|
| ID | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 |
| X | 1 | 1 | 0 | 1 | 1 | 1 | 0 | 1 | 1 | 1 | 0 | 1 | 1 | 1 | 0 | 1 | 1 | 1 | 0 | 1 | 1 | 1 | 0 | 1 |
| f(X, ID) | 0 | 1 | 1 | 1 | 0 | 1 | 1 | 1 | 0 | 1 | 1 | 1 | 0 | 1 | 1 | 1 | 0 | 1 | 1 | 1 | 0 | 1 | 1 | 1 |

The infrared-ray transmitting and receiving unit 4 according to this embodiment is arranged so as to carry out communication in accordance with a known base band system. The base band system permits high-speed communication at a lower consumed power and simplifies a circuit arrangement as compared with other modulation systems such as an amplitude shift keying (ASK), a frequency shift keying (FSK) or the like.

The lock apparatus 10 is provided at a predetermined position in association with the door. The lock apparatus 10 has an infrared-ray transmitting and receiving unit 11 for communicating with the key apparatus 1, a signal processing circuit unit 12, a memory unit 13 for storing a specific (own) identification signal ID, a communication permission signal generating means 14 for generating the communication permission signal, and a drive unit 15 for controlling a door locking or unlocking operation based on a command signal from the signal processing circuit unit 12.

A binary counter for processing 24 bits, for example, is employed as the communication permission signal generating means 14. This 24-bit binary counter carries out a count operation in accordance with a predetermined clock signal regardless of the communication. When the lock apparatus 10 receives the communication request signal from the key apparatus 1, the operation of the 24-bit binary counter is stopped and then a count value of the binary counter at this time is read, thereby the communication permission signal formed of the 24-bit random number signal, for example, being obtained.

The signal processing circuit unit 12 is formed of a microcomputer. When the lock apparatus 10 receives the communication request signal from the key apparatus 1, as shown in FIG. 3C, in a period of 50 ms succeeding a period of 40 ms after completion of the communication request signal having a period of 100 ms, for example, the signal processing circuit unit 12 transmits the communication permission signal formed of the random number signal X and generated by the communication permission signal generating means 14 to the key apparatus 1 for a period of 30 ms, for example.

When the lock apparatus 10 receives from the key apparatus 1 the encrypted signal f(X, ID) obtained by encrypting the identification signal ID with the random number signal X, the signal processing circuit unit 12 decrypts the received encrypted signal f(X, ID) in accordance with a predetermined function f⁻¹{f(X, ID), X} by using the previously transmitted 24-bit random number signal X, for example, and checks whether or not the identification signal obtained by this decryption is the specific (own) identification signal ID previously stored (registered) in the memory unit 13.

As a result of the check processing, if the decrypted identification signal is agreed with the identification signal ID previously stored (registered) in the memory unit 13, then the signal processing circuit unit 12 supplies a locking/unlocking command signal based on a door opening/closing command included in the communication request signal to the drive unit 15. Then, under the operation of the drive unit 15, the door is opened or closed.

The infrared-ray transmitting and receiving unit 11 according to this embodiment is arranged similarly to the above-mentioned infrared-ray transmitting and receiving unit 4, and arranged so as to carry out communication in accordance with the known base band system. In FIG. 1, batteries 6 and 16 are used to energize the key apparatus 1 and the lock apparatus 10, respectively.

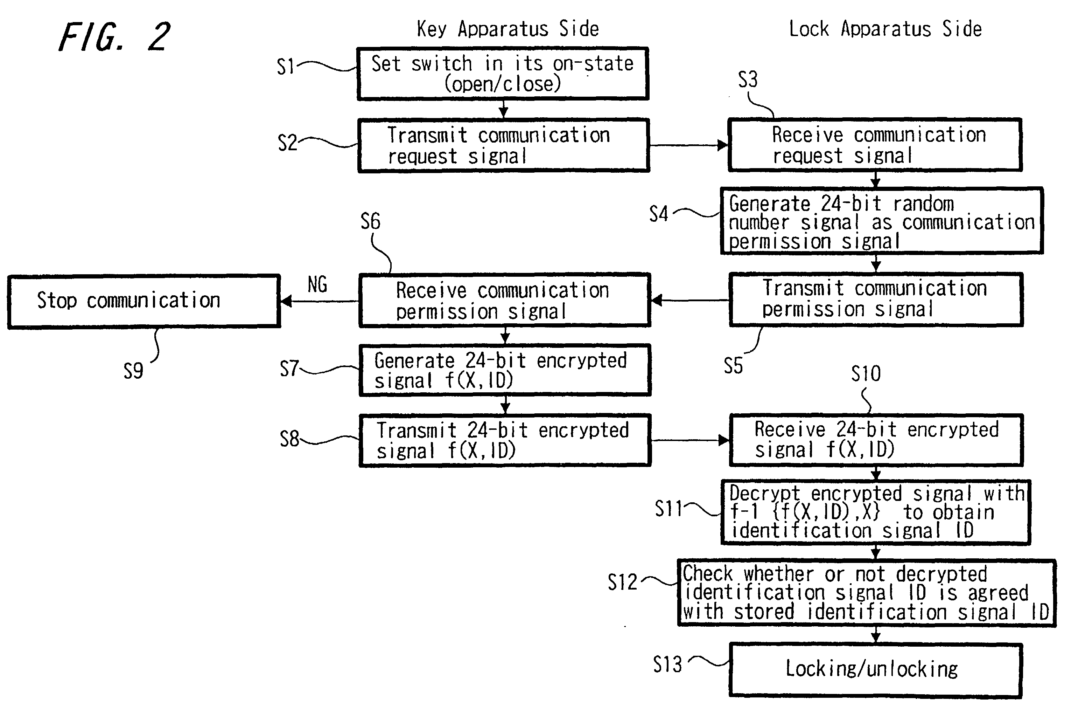

An operation of the keyless entry system for opening and closing a door according to this embodiment will be described with reference to FIG. 2 which is a flowchart therefor and with reference to FIGS. 3A to 3D which are timing charts therefor. In this embodiment, it is assumed that the same specific (own) identification signals ID, e.g., the identification signals ID formed of codes of 24 bits, for example, are previously stored (registered) in the memory units 5 and 13.

In step S1 of the flowchart shown in FIG. 2, the switch unit 2 of the key apparatus 1 is operated and the switch thereof is set in its on-state, thereby a command to open or close a door being issued initially. In step S2, as shown in FIG. 3A, for example, the key apparatus 1 transmits the communication request signal including the door opening/closing command signal to the lock apparatus 10 for a period of 100 ms.

In step S3, the lock apparatus 10 receives the communication request signal as shown FIG. 3D. Then, the processing proceeds to step S4, wherein the lock apparatus 10 obtains the communication permission signal formed of the 24-bit random number signal X, for example, generated by the communication permission signal generating means 14 during a period of 50 ms succeeding a period of 40 ms after completion of the communication request signal. In step S5, as shown in FIG. 3C, the lock apparatus 10 transmits the communication permission signal formed of the random number signal X to the key apparatus 1 for a period of 30 ms, for example.

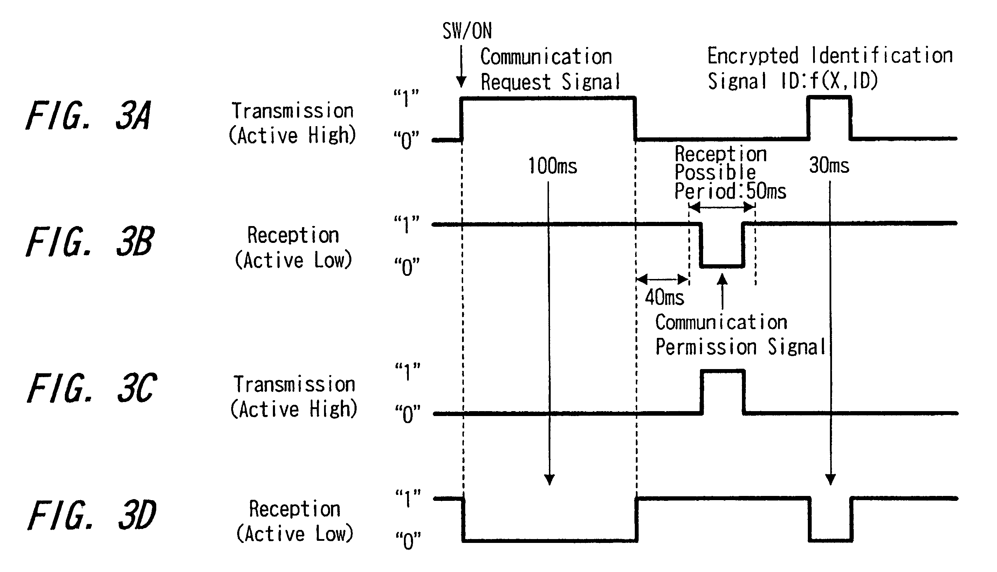

In step S6, the key apparatus 1 receives the communication permission signal formed of the random number signal X during the reception possible period of 50 ms succeeding the period of 40 ms after completion of the communication request signal as shown in FIG. 3B. Then, the processing proceeds to step S7, wherein the key apparatus 1 encrypts the specific (own) identification signal ID stored (registered) in the memory unit 5 to convert it into the 24-bit code signal, in accordance with the predetermined function f(X, ID) by using the 24-bit random number signal X, for example. Then, the processing proceeds to step S8, wherein the key apparatus 1 supplies the encrypted signal f(X, ID) to the lock apparatus 10 during the period of 30 ms, for example, as shown in FIG. 3A. Then, the processing proceeds to step S10.

If in step S6 the key apparatus 1 does not receive the communication permission signal during the reception possible period, then the processing proceeds to step S9, wherein the communication between the key apparatus 1 and the lock apparatus 10 is stopped.

If in step S10 the lock apparatus 10 receives the encrypted signal f(X, ID) as shown in FIG. 3D, then the processing proceeds to step S11, wherein the lock apparatus 10 decrypts the received encrypted signal f(X, ID) in accordance with the predetermined function f⁻¹{f(X, ID), X} by using the previously transmitted random number signal X. Then, the processing proceeds to step S12, wherein the lock apparatus 10 checks whether or not the decrypted identification signal ID is agreed with the specific (own) identification signal ID previously stored (registered) in the memory unit 13. As a result of the check processing, if the decrypted identification signal is agreed with the specific (own) identification signal ID previously stored (registered) in the memory unit 13, then the processing proceeds to step S13, wherein, in accordance with the door opening or closing command signal of the communication request signal, the signal processing circuit unit 12 supplies the unlocking or locking command signal to the drive unit 15 for carrying out the unlocking or locking operation of the door. Then, under the control of the drive unit 15, the door is opened or closed.

According to this embodiment, only when the key apparatus 1 receives the communication permission signal from the lock apparatus 10 during the reception possible period, the key apparatus 1 transmits the identification signal to the key apparatus 10. Therefore, the period of transmitting the identification signal is limited, which advantageously improves the security.

According to this embodiment, every time when the operation of opening or closing the door is attempted, the lock apparatus 10 generates the communication permission signal formed of the random number signal X and the key apparatus 1 encrypts the identification signal ID by using the random number signal X and supplies the encrypted signal f(X, ID) to the lock apparatus 10. Therefore, since the signals transmitted in this both-way communication are constantly different, even if these communication signals are intercepted, the specific (own) identification signal ID is prevented from being stolen.

According to this embodiment, even if the operation of opening or closing the door is attempted any times, the possibility that the code signals are agreed with each other by accident is constant, e.g., the possibility is constantly about one over 16.7 million in a case of the 24-bit code signal. Therefore, it is advantageously possible to realize the extremely high security with ease.

While in this embodiment the communication between the key apparatus 1 and the lock apparatus 10 is carried out in accordance with the base band system by using the infrared rays, the communication may be carried out in accordance with some other modulation systems such as the ASK, the FSK or the like by using the infrared rays. It is needless to say that the communication may be carried out by using a radio wave or a supersonic wave instead of the infrared rays.

While in this embodiment the communication permission signal is formed of the random number signal, it is not necessary to form the communication permission signal of the random number signal and it is not necessary to encrypt the identification signal transmitted from the key apparatus 1.

It is not necessary that each of the communication permission signal formed of the random number signal, the identification signal and the encrypted signal is formed of 24 bits. It is sufficient to determine the number of bits thereof in response to a required degree of the security.

While in this embodiment the communication request signal includes the locking or unlocking command signal, the locking or unlocking command signal may be added to the above encrypted signal f(X, ID) or may be transmitted individually.

According to the present embodiment, only when an apparatus to be detected (the key apparatus) receives the communication permission signal from a detecting apparatus (the lock apparatus) for a predetermined period, for example, the apparatus to be detected (the key apparatus) transmits the identification signal to the detecting apparatus (the lock apparatus). Therefore, the period of transmitting the identification signal is limited, which advantageously improves the security.

Having described a preferred embodiment of the present invention with reference to the accompanying drawings, it is to be understood that the present invention is not limited to the above-mentioned embodiment and that various changes and modifications can be effected therein by one skilled in the art without departing from the scope of the present invention as defined in the appended claims.

## Claims

1. An identification signal checking apparatus comprising:
a first device (1) having a first wireless transmitting and receiving unit (4), a first signal processing unit (3) and a first memory unit (5) for storing an identification signal ID, said first device (1) being operative to transmit a communication request signal; and
a second device (10) having a second wireless transmitting and receiving unit (11), a second signal processing unit (12), a second memory unit (13) for storing an identification signal, and a communication permission signal generating means (14);
wherein said second device (10) is operative to transmit a communication permission signal X to said first device (10) in response to said communication request signal, wherein said first device (1) is operative to transmit the identification signal ID stored in said first memory unit (5) to said second device (10) upon receipt of said communication permission signal X transmitted from said second device (10), and wherein said second device (10) is operative to check whether or not the transmitted identification signal coincides with the identification signal stored in said second memory unit (13) ; and
said first device (1) is operative to encrypt the identification signal ID stored in said first memory unit (5) by the communication permission signal X to convert it in accordance with a predetermined function f(X, ID) and to send the encrypted identification signal to said second device (10);
**characterised in that**
said first device (1) is operable to be only in a reception possible state, operable to receive said communication permission signal X after a first predetermined period and within a second predetermined time period following transmission of said communication request signal.

2. An identification signal checking apparatus according to claim 1, wherein said communication permission signal X is a random number signal, and said second device (10) is operative to decrypt said encrypted identification signal and to check whether or not said decrypted identification signal coincides with the identification signal stored in said second memory unit (13).

3. An identification signal checking apparatus according to claim 1 or claim 2, wherein said first and second wireless transmitting and receiving units (4, 11) are respectively infrared-ray transmitting and receiving units.

4. An identification signal checking apparatus according to any one of the preceding claims, wherein said first device (1) is a key apparatus, said second device (10) is a lock apparatus, said lock apparatus (10) is provided with a locking means and/or an unlocking means, and said lock apparatus (10) is operative to control said locking means and/or said unlocking means based on a check output indicative of whether or not the transmitted identification signal coincides with the identification signal stored in said second memory unit (13).

5. An identification signal checking apparatus according to any one of the preceding claims, wherein said first predetermined time period is 40ms.

6. An identification signal checking apparatus according to any one of the preceding claims, wherein said second predetermined time period is 50ms.

7. An identification signal checking method of an identification signal checking apparatus comprising a first device (1) having a first wireless transmitting and receiving unit (4), a first signal processing unit (3) and a first memory unit (5) for storing an identification signal ID, and a second device (10) having a second wireless transmitting and receiving unit (11), a second signal processing unit (12), and a second memory unit (13) for storing an identification signal, the method comprising the steps of:
transmitting (S2) a communication request signal from said first device (1);
transmitting (S5) a communication permission signal X from said second device (10) to said first device (1) in response to said communication request signal;
transmitting the identification signal ID stored in said first memory unit (5) from said first device (1) to said second device (10) upon receipt of said communication permission signal X transmitted from said second device (10); and
checking in said second device (10) whether or not the transmitted identification signal coincides with the identification signal stored in said second memory unit (13);
encrypting (S7) the identification signal ID stored in said first memory unit (5) by the communication permission signal X to convert it in accordance with the predetermined function f(X, ID) and sending the encrypted identification signal to said second device (10); and
charaterised by
only allowing receipt of said communication permission signal from said second device (10) at said first device (1) after a first predetermined period and within a second predetermined time period following reception of said communication request signal.

8. An identification signal checking method according to claim 7, wherein said communication permission signal is a random number signal, and said second device (10) decrypts (S11) said encrypted identification signal and checks (S12) whether or not said decrypted identification signal coincides with the identification signal stored in said second memory unit (13).

9. An identification signal checking method according to claim 7 or claim 8, wherein said first and second wireless transmitting and receiving units (4, 11) are respectively infrared-ray transmitting and receiving units.

10. An identification signal checking method according to any one of claims 7 to 9, wherein said first device (1) is a key apparatus, said second device (10) is a lock apparatus, said lock apparatus (10) is provided with a locking means and/or an unlocking means, and said lock apparatus (10) controls said locking means and/or said unlocking means based on a check output indicative of whether or not the transmitted identification signal coincides with the identification signal stored in said second memory unit (13).

11. An identification signal checking method according to any one of claims 7 to 10, wherein said first predetermined time period is 40ms.

12. An identification signal checking method according to any one of claims 7 to 11, wherein said second predetermined time period is 50ms.

## Patentansprüche

1. Identifikationssignal-Prüfvorrichtung, welche aufweist:
eine erste Einrichtung (1), die eine erste drahtlose Übertragungs- und Empfangseinheit (4), eine erste Signalverarbeitungseinheit (3) und eine erste Speichereinheit (5) zum Speichern eines Identifikationssignals ID aufweist, wobei die erste Einrichtung (1) betriebsfähig ist, ein Kommunikationsanforderungssignal zu übertragen; und
eine zweite Einrichtung (1 0), die eine zweite drahtlose Übertragungs- und Empfangseinheit (11), eine zweite Signalverarbeitungseinheit (12), eine zweite Speichereinheit (13) zum Speichern eines Identifikationssignals und eine Kommunikationszulassungs-Signalerzeugungseinrichtung (14) aufweist;
wobei die zweite Einrichtung (10) betriebsfähig ist, ein Kommunikationszulassungssignal X zur ersten Einrichtung (10) als Antwort auf das Kommunikationsanforderungssignal zu übertragen, wobei die erste Einrichtung (10) betriebsfähig ist, das Identifikationssignal ID, welches in der ersten Speichereinheit (5) gespeichert ist, zur zweiten Einrichtung (10) bei Empfang des Kommunikationszulassungssignals X zu übertragen, welches von der zweiten Einrichtung (10) übertragen wird, und wobei die zweite Einrichtung (10) betriebsfähig ist, zu prüfen, ob das übertragene Identifikationssignal mit dem Identifikationssignal, welches in der zweiten Speichereinheit (13) gespeichert ist, übereinstimmt oder nicht; und
die erste Einrichtung (1) betriebsfähig ist, das Identifikationssignal ID, welches in der ersten Speichereinheit (5) gespeichert ist, durch das Kommunikationszulassungssignal X zu verschlüsseln, um dieses gemäß einer vorher festgelegten Funktion f (X, ID) umzusetzen und um das verschlüsselte Identifikationssignal zur zweiten Einrichtung (10) zu senden;
**dadurch gekennzeichnet, dass**
die erste Einrichtung (1) betriebsfähig ist, lediglich in einem Empfangsmöglichkeitszustand zu sein, und betriebsfähig ist, das Kommunikationszulassungssignal X nach einer ersten vorher festgelegten Periode und innerhalb einer zweiten vorher festgelegten Zeitperiode, welche auf die Übertragung des Kommunikationsanforderungssignals folgt, zu empfangen.

2. Identifikationssignal-Prüfvorrichtung nach Anspruch 1, wobei das Kommunikationszulassungssignal X ein wahlfreies Nummernsignal ist, und die zweite Einrichtung (10) betriebsfähig ist, das verschlüsselte Identifikationssignal zu entschlüsseln und zu prüfen, ob das entschlüsselte Identifikationssignal mit dem Identifikationssignal, welches in der zweiten Speichereinheit (13) gespeichert ist, übereinstimmt oder nicht.

3. Identifikationssignal-Prüfvorrichtung nach Anspruch 1 oder 2, wobei die erste und die zweite drahtlose Übertragungs- und Empfangseinheit (4, 11) jeweils Infrarotstrahl-Übertragungs- und -Empfangseinheiten sind.

4. Identifikationssignal-Prüfvorrichtung nach einem der vorhergehenden Ansprüche, wobei die erste Einrichtung (1) eine Verschlüsselungsvorrichtung ist, die zweite Einrichtung (10) eine Verriegelungsvorrichtung ist, die Verriegelungsvorrichtung (10) mit einer Verriegelungseinrichtung und/oder einer Entriegelungseinrichtung versehen ist und die Verriegelungsvorrichtung (10) betriebsfähig ist, die Verriegelungseinrichtung und/oder die Entriegelungseinrichtung auf der Basis eines Prüfausgangssignals zu steuern, welches zeigt, ob das übertragene Identifikationssignal mit dem Identifikationssignal, welches in der zweiten Speichereinheit (13) gespeichert ist, übereinstimmt oder nicht.

5. Identifikationssignal-Prüfvorrichtung nach einem der vorhergehenden Ansprüche, wobei die erste vorher festgelegte Zeitperiode 40 ms beträgt.

6. Identifikationssignal-Prüfvorrichtung nach einem der vorhergehenden Ansprüche, wobei die zweite vorher festgelegte Zeitperiode 50 ms beträgt.

7. Identifikationssignal-Prüfverfahren einer Identifikationssignal-Prüfvorrichtung, welche eine erste Einrichtung (1) aufweist, die eine erste drahtlose Übertragungs- und Empfangseinheit (4), eine erste Signalverarbeitungseinheit (3) und eine erste Speichereinheit (5) zum Speichern eines Identifikationssignals ID aufweist, und eine zweite Einrichtung (10), die eine zweite drahtlose Übertragungs- und Empfangseinheit (11), eine zweite Signalverarbeitungseinheit (12) und eine zweite Speichereinheit (13) zum Speichern eines Identifikationssignals aufweist, wobei das Verfahren folgende Schritte aufweist:
Übertragen (S2) eines Kommunikationsanforderungssignals von der ersten Einrichtung (1);
Übertragen (S5) eines Kommunikationszulassungssignals X von der zweiten Einrichtung (10) zur ersten Einrichtung (1) als Antwort auf das Kommunikationsanforderungssignal;
Übertragen des Identifikationssignals ID, welches in der ersten Speichereinheit (5) gespeichert ist, von der ersten Einrichtung (1) zur zweiten Einrichtung (10) bei Empfang des Kommunikationszulassungssignals X, welches von der zweiten Einrichtung (10) übertragen wird; und
Prüfen in der zweiten Einrichtung (10), ob das übertragene Identifikationssignal mit dem Identifikationssignal, welches in der zweiten Speichereinheit (13) gespeichert ist, übereinstimmt oder nicht;
Verschlüsseln (S7) des Identifikationssignals ID, welches in der ersten Speichereinheit (5) gespeichert ist, durch das Kommunikationszulassungssignal X, um dieses gemäß der vorher festgelegten Funktion f(X, ID) umzusetzen und das verschlüsselte Identifikationssignal zur zweiten Einrichtung (10) zu senden; und
**gekennzeichnet durch** ledigliches Zulassen des Empfangs des Kommunikationssignals von der zweiten Einrichtung (10) in der ersten Einrichtung (1) nach einer ersten vorher festgelegten Periode und innerhalb einer zweiten vorher festgelegten Zeitperiode, die auf den Empfang des Kommunikationsanforderungssignals folgt.

8. Identifikationssignal-Prüfverfahren nach Anspruch 7, wobei das Kommunikationszulassungssignal ein wahlfreies Nummernsignal ist und die zweite Einrichtung (10) das verschlüsselte Identifikationssignal entschlüsselt (S11) und prüft (S 12), ob das entschlüsselte Identifikationssignal mit dem Identifikationssignal, welches in der zweiten Speichereinheit (13) gespeichert ist, übereinstimmt oder nicht.

9. Identifikationssignal-Prüfverfahren nach Anspruch 7 oder 8, wobei die erste und zweite drahtlose Übertragungs- und Empfangseinheit (4, 11) jeweils Infrarotstrahl-Übertragungs- und -Empfangseinheiten sind.

10. Identifikationssignal-Prüfverfahren nach einem der Ansprüche 7 bis 9, wobei die erste Einrichtung (1) eine Verschlüsselungsvorrichtung ist, die zweite Einrichtung (10) eine Verriegelungsvorrichtung ist, die Verriegelungsvorrichtung (10) mit einer Verriegelungseinrichtung und/oder einer Entriegelungseinrichtung versehen ist und die Verriegelungsvorrichtung (10) die Verriegelungseinrichtung und/oder die Entriegelungseinrichtung auf der Basis eines Prüfausgangssignals steuert, welches zeigt, ob das übertragene Identifikationssignal mit dem Identifikationssignal, welches in der zweiten Speichereinheit (13) gespeichert ist, übereinstimmt oder nicht.

11. Identifikationssignal-Prüfverfahren nach einem der Ansprüche 7 bis 10, wobei die erste vorher festgelegte Zeitperiode 40 ms beträgt.

12. Identifikationssignal-Prüfverfahren nach einem der Ansprüche 7 bis 11, wobei die zweite vorher festgelegte Zeitperiode 50 ms beträgt.

## Revendications

1. Dispositif de contrôle de signaux d'identification comprenant :
un premier dispositif (1) possédant une première unité d'émission et de réception sans fil (4), une première unité de traitement de signaux (3) et une première unité de mémoire (5) pour mémoriser un signal d'identification ID, ledit premier dispositif (1) pouvant agir de manière à émettre un signal de demande de communication; et
un second dispositif (10) possédant une seconde unité d'émission et de réception sans fil (11), une seconde unité de traitement de signaux (12), une seconde unité de mémoire (13) pour mémoriser un signal d'identification et des moyens (14) de production d'un signal d'autorisation de communication;
dans lequel ledit second dispositif (10) peut agir de manière à émettre un signal d'autorisation de communication X vers ledit premier dispositif (10) en réponse audit signal de demande de communication, et dans lequel ledit premier dispositif (1) peut agir de manière à émettre le signal d'identification ID mémorisé dans ladite première unité de mémoire (5) vers ledit second dispositif (10) lors de la réception dudit signal d'autorisation de communication (X) transmis par ledit second dispositif (10), et dans lequel ledit second dispositif (10) peut agir de manière à contrôler si le signal d'identification transmis coïncide ou non avec le signal d'identification mémorisé dans ladite seconde unité de mémoire (13); et
ledit premier dispositif (1) peut agir de manière à crypter le signal d'identification ID mémorisé dans ladite première unité de mémoire (5) par le signal d'autorisation de communication X pour sa conversion conformément à une fonction prédéterminée f(X,ID) et pour envoyer le signal d'identification crypté audit second dispositif (10) ;
**caractérisé en ce que**
ledit premier dispositif (1) peut agir de manière à être uniquement dans un état de réception possible, peut agir de manière à recevoir ledit signal de communication X après un premier intervalle de temps prédéterminé et dans un second intervalle de temps prédéterminé à la suite de la transmission dudit signal de demande de communication.

2. Dispositif de contrôle de signaux d'identification selon la revendication 1, dans lequel ledit signal d'autorisation de communication X est un signal de nombre aléatoire et ledit second dispositif (10) peut agir de manière à décrypter ledit signal d'identification crypté et à vérifier si ledit signal d'identification décrypté coïncide ou non avec le signal d'identification mémorisé dans ladite seconde unité de mémoire (13).

3. Dispositif de contrôle de signaux d'identification selon la revendication 1 ou la revendication 2, dans lequel lesdites première et seconde unités d'émission et de réception sans fil (4,11) sont respectivement des unités d'émission et de réception à infrarouge.

4. Dispositif de contrôle de signaux d'identification selon l'une quelconque des revendications précédentes, dans lequel ledit premier dispositif (1) est un dispositif de clé, ledit second dispositif (10) est un dispositif de serrure, ledit dispositif de serrure (10) est équipé de moyens de blocage et/ou de moyens de déblocage, et ledit dispositif de serrure (10) peut agir de manière à commander lesdits moyens de blocage et/ou lesdits moyens de déblocage sur la base d'un signal de sortie de contrôle indicatif du fait que le signal d'identification émis coïncide ou non avec le signal d'identification mémorisé dans ladite seconde unité de mémoire (13).

5. Dispositif de contrôle de signaux d'identification selon l'une quelconque des revendications précédentes, dans lequel ledit premier intervalle de temps prédéterminé est égal à 40 ms.

6. Dispositif de contrôle de signaux d'identification selon l'une quelconque des revendications précédentes, dans lequel ledit second intervalle de temps prédéterminé est égal à 50 ms.

7. Procédé de contrôle de signaux d'identification d'un dispositif de contrôle de signaux d'identification, comprenant un premier dispositif (1) comportant une première unité d'émission et de réception sans fil (4), une première unité de traitement de signaux (3) et une première unité de mémoire (5) pour mémoriser un signal d'identification ID, et un second dispositif (10) possédant une seconde unité d'émission et de réception sans fil (11), une seconde unité de traitement de signaux (12) et une seconde unité de mémoire (13) pour mémoriser un signal d'identification, le procédé comportant les étapes consistant à :
émettre (S2) un signal de demande de communication par ledit premier dispositif (1);
émettre (S5) un signal d'autorisation de communication X à partir dudit second dispositif (10) vers ledit premier dispositif (1) en réponse audit signal de demande de communication;
émettre le signal d'identification ID mémorisé dans ladite première unité de mémoire (5) depuis ledit premier dispositif (1) vers ledit second dispositif (10) lors de la réception dudit signal d'autorisation de communication (X) transmis par ledit second dispositif (10); et
contrôler, dans ledit second dispositif (10), si le signal d'identification émis coïncide ou non avec le signal d'identification mémorisé dans ladite seconde unité de mémoire (13);
crypter (S7) le signal d'identification ID mémorisé dans ladite première unité de mémoire (5) par ledit signal d'autorisation de communication X pour sa conversion conformément à la fonction prédéterminée f(X, ID) et envoyer le signal d'identification crypté audit second dispositif (10); et
**caractérisé en ce**
**qu'**on autorise uniquement la réception dudit signal d'autorisation de communication depuis ledit second dispositif (10) dans ledit premier dispositif (1) au bout d'un premier intervalle de temps prédéterminé et au cours d'un second intervalle de temps prédéterminé à la suite de la réception dudit signal de demande de communication.

8. Procédé de contrôle de signaux d'identification selon la revendication 7, selon lequel ledit signal d'autorisation de communication est un signal formé d'un nombre aléatoire, et ledit second dispositif (10) décrypte (S11) ledit signal d'identification crypté et vérifie (S12) si ledit signal d'identification crypté coïncide ou non avec le signal d'identification mémorisé dans ladite seconde unité de mémoire (13).

9. Procédé de contrôle de signaux d'identification selon la revendication 7 ou la revendication 8, selon lequel lesdites première et seconde unités d'émission et de réception sans fil (4,11) sont respectivement des unités d'émission et de réception à infrarouge.

10. Procédé de contrôle de signaux d'identification selon l'une quelconque des revendications 7 à 9, dans lequel ledit premier dispositif (1) est un dispositif de clé et ledit second dispositif (10) est un dispositif de serrure, ledit dispositif de serrure (10) est pourvu de moyens de blocage et/ou de moyens de déblocage et ledit dispositif de serrure (10) commande lesdits moyens de blocage et/ou lesdits moyens de déblocage sur la base d'un signal de sortie de contrôle indicatif du fait que le signal d'identification transmis coincide ou non avec le signal d'identification mémorisé dans ladite seconde unité de mémoire (13).

11. Procédé de contrôle de signaux d'identification selon l'une quelconque des revendications 7 à 10, dans lequel ledit premier intervalle de temps est égal à 40 ms.

12. Procédé de contrôle de signaux d'identification selon l'une quelconque des revendications 7 à 11, dans lequel ledit second intervalle de temps prédéterminé est égal à 50 ms.
